# EUROPEAN PATENT APPLICATION

(11) **EP 4 369 547 A1**
(43) Date of publication of application: **15.05.2024**
(21) Application number: 22206848.8
(22) Date of filing: 11.11.2022
(51) Int. Cl.: H02J 3/01, H02J 3/38

(54) **ENERGY CONVERSION SYSTEM AND OPERATION METHOD**

(71) Applicant: Siemens Gamesa Renewable Energy A/S, 7330 Brande (DK)
(72) Inventor: Egedal, Per, 7400 Herning (DK); Thisted, Jan, 8830 Tjele (DK); Velotto, Giovanni, 7100 Vejle (DK)
(74) Representative: SGRE-Association

(57) **Abstract**

The present invention relates to an energy conversion system (1) for producing and converting electric energy, comprising a plurality of electric power producing devices (2) with a plurality of first power converting devices (3), a plurality of electric energy converting devices (4) with a plurality of second power converting devices (5) and an electric power micro grid (6) for transporting electric energy from the first power converting devices (3) to the second power converting devices (5), wherein each first power converting device (3) comprises a first network bridge (7) for pulse width modulation and each second power converting device (5) comprises a second network bridge (8) for pulse width modulation. The second network bridges (8) are configured for providing pulse width modulation with a predetermined relative time offset to reduce harmonics. The invention also relates to a method for operating an energy conversion system (1).

## Description

The present invention relates to an energy conversion system for producing and converting electric energy. The invention also relates to a method for operating an energy conversion system to produce and convert electric energy.

It is known that electric energy can be used for the production of chemicals, such as hydrogen, ammonia or the like. For this purpose, electrical energy converting devices are used.

To provide the necessary electrical energy, the electrical energy converting devices can be connected to a global electric power grid with a plurality of electrical power producing devices.

In a different system approach, the electrical energy converting devices and the electrical energy producing devices are located within a so-called *"micro grid",* which is disconnected or at least disconnectable from the global electric power grid. Thus, the system is producing the electric energy, which is used for the production of chemicals itself. Therefore, the energy conversion system can be operated completely independently.

Since renewable energy producing devices, such as wind turbines and photovoltaic modules, can produce electricity at comparatively low prices, on an environmentally friendly basis and with great fluctuation, such devices are particularly suitable for the production of e-fuels.

Generally, the renewable energy producing devices are connected to the power grid with a power converting device, comprising a power converter network bridge, in the following denoted as *"network bridge",* using pulse width modulation (PWM) to interface a direct current (DC) link voltage to a fixed network frequency. With a plurality of renewable energy producing devices and power converting devices, this can cause harmonics, which can distort the resulting waveform created by the network bridges.

A method to reduce lower harmonics and PWM switching sideband harmonics to an acceptable or allowed level, is the use of harmonic filtering. Harmonic filtering can be based on either passive filtering with passive hardware filter components or active filtering with active dampening of specific harmonic frequencies based on advanced converter control. Both methods are expensive, require previous extensive harmonic studies and may result in considerable high electrical losses.

The documents EP 1995863 A2 and US 2021/0249865 A1 disclose alternative methods for reducing harmonics in a power grid. According to the methods, the pulse width modulations of the plurality of network bridges are performed with a phase delay between the network bridges. By these means and for a global utility grid, only a low effort for additional harmonic filtering devices has to be taken to keep the harmonics at an acceptable level. However, in a micro grid with energy producing devices and energy consuming devices, the extend of additional harmonic filtering still is comparatively large, and the costs as well as the electrical losses are relatively high.

It is therefore the object of the present invention to eliminate or at least partially eliminate the disadvantages described above in the case of an energy conversion system for producing and converting electric energy. In particular, it is the object of the present invention to create an energy conversion system for producing and converting electric energy and a method for operating an energy conversion system which further reduce harmonics in a simple and inexpensive manner.

The above object is achieved by the claims. Accordingly, the problem is solved by an energy conversion system for producing and converting electric energy with the features of the independent claim 1 and by a method for operating an energy conversion system with the features of the subordinate claim 10. Further features and details of the invention emerge from the sub claims, the description and the drawings. Features and details that are described in connection with the energy conversion system according to the invention naturally also apply in connection with the method for operating an energy conversion system according to the invention and vice versa, so that with regard to the disclosure of the individual aspects of the invention, reference is or can always be made to each other.

According to a first aspect of the invention, the object is achieved by an energy conversion system for producing and converting electric energy. The energy conversion system comprises a plurality of electric power producing devices with a plurality of first power converting devices, a plurality of electric energy converting devices with a plurality of second power converting devices and an electric power micro grid for transporting electric energy from the first power converting devices to the second power converting devices. Each first power converting device comprises a first network bridge for pulse width modulation and each second power converting device comprises a second network bridge for pulse width modulation. According to the invention, the second network bridges are configured for providing pulse width modulation with a predetermined relative time offset to reduce harmonics.

The energy conversion system is configured as an autonomous system, which can produce the electric energy needed for the conversion to another energy form. Therefore, the micro grid is provided. A micro grid is considered as a local grid, which is preferably decoupled from a global utility grid. It can be provided that the micro grid can be electrically coupled to the global utility grid, by a power switch or the like. This can give the possibility to import electric energy from the utility grid in case of lack of electric energy, e.g., due to maintenance of an energy producing device, low availability of regenerative energy or the like. Furthermore, by these means, excessive electric energy can be exported to the utility grid, e.g., when the amount of electric energy produced exceeds the total available power of the electric energy converting devices.

For producing the electric energy, the energy conversion system comprises the plurality of electric power producing devices. For converting the electric energy produced by the electric power producing devices to match the requirements of the electric power micro grid, the energy conversion system comprises the plurality of first power converting devices. Each first power converting device comprises a first network bridge for pulse width modulation. This means that each first power converting device is assigned to at least one first network bridge.

For converting the electric energy into a different energy form, such as chemical energy, potential energy or the like, the energy conversion system comprises the plurality of electric energy converting devices with the plurality of second power converting devices. Each second power converting device comprises a second network bridge for pulse width modulation. This means that each second power converting device is assigned to at least one second network bridge.

The second network bridges are configured for providing pulse width modulation with a predetermined relative time offset to reduce harmonics. This means that the second network bridges are operated with a mutual phase delay.

The invention has identified the influence of network bridges of power consuming devices to the micro grid due to pulse width modulation and the resulting amplification of harmonics. By operating the second network bridges with the mutual phase delay, the harmonics can be reduced to an acceptable level.

It is preferred that the number of electric energy converting devices is larger than the number of electric power production devices. Thus, it is preferred that the number of second network bridges is larger than the number of first network bridges. With the number of second network bridges being larger compared to first network bridges, the potential effect on the development of harmonics by the second network bridges is increased. Since the second network bridges are operated with the mutual phase delay, the effect on the reduction of the total harmonics of the micro grid is increased compared to a ratio towards the first network bridges.

An energy conversion system for producing and converting electric energy according to the invention has the advantage over conventional energy conversion systems that in a simple and inexpensive way, a usually neglected source of unwanted harmonics, namely the operation of the second network bridges of the electric energy converting devices, is addressed and reduced significantly. Therefore, there is less demand for expensive additional harmonic filtering. By these means, the efficiency of the energy conversion system according to the invention is increased compared to conventional energy conversion systems.

According to a preferred further development of the invention, an energy conversion system can provide that the second network bridges are configured for providing pulse width modulation with the same switching period length. When the pulse width modulations of the second network bridges have the same switching period length, the mutual time offset can be held constant easily. Thus, the dampening effect on the harmonics is constant or at least smoothed. This has the advantage that in a simple and inexpensive way, the efficiency of the energy conversion system can be increased.

It is preferred according to the invention that the second power converting devices comprise a second data exchange port for communication to coordinate the time offset for the second network bridges. The second data exchange ports can be directly interconnected via a switch, hub or the like. Alternatively, the second data exchange ports can be linked to a switching coordination device for controlling the relative time offset of the pulse width modulations of the second network bridges. This has the advantage that in a simple and inexpensive way, the coordination and reliability of the implementation of the relative time offset can be increased.

More preferred, the first network bridges are configured for providing pulse width modulation with a predetermined relative time offset to reduce harmonics. On other words, it is preferred that the first network bridges and the second network bridges are configured for providing pulse width modulation with a predetermined relative time offset to reduce harmonics. Preferably, the relative time offset of the first network bridges is coordinated between the first network bridges and the relative time offset of the second network bridges is coordinated between the second network bridges. This has the advantage that in a simple and inexpensive way, the efficiency of the energy conversion system can be increased.

In a particularly preferred embodiment, the first network bridges are configured for providing pulse width modulations with the same switching period length. When the pulse width modulations of the first network bridges have the same switching period length, the mutual time offset can be held constant easily. Thus, the dampening effect on the harmonics is constant or at least smoothed. More preferred, the switching period length is the same as for the second network bridges. This has the advantage that in a simple and inexpensive way, the efficiency of the energy conversion system can be increased.

According to a preferred embodiment of the invention, the first power converting devices comprise a first data exchange port for communication to coordinate the time offset for the first network bridges. The first data exchange ports can be directly interconnected via a switch, hub or the like. Alternatively, the first data exchange ports can be linked to a switching coordination device for controlling the relative time offset of the pulse width modulations of the second network bridges. Preferably, the switching coordination device is configured for controlling the switching of the first network bridges and the second network bridges. This has the advantage that in a simple and inexpensive way, the coordination and reliability of the implementation of the relative time offset can be further increased. Thus, the efficiency of the energy conversion system can be increased.

Particularly preferred, the first data exchange ports and the second data exchange ports are configured for coordination of a time offset between the pulse width modulations of the first network bridges and the pulse width modulations of the second network bridges. In other words, it is preferred that the energy conversion system is configured for controlling a time offset within the first network bridges, the second network bridges and between the first network bridges and the second network bridges. Preferably, for the coordination, the switching coordination device is provided. This has the advantage that in a simple and inexpensive way, the dampening effect of the harmonics can be further improved. Thus, the efficiency of the energy conversion system can be increased.

It is preferred, according to the invention, that the electric power producing devices comprise at least one wind turbine and/or at least one photovoltaic module. Modern wind turbines are configured for converting wind energy into electric energy at comparatively low overall costs. Modern photovoltaic modules are configured for converting solar energy into electric energy at comparatively low overall costs. This has the advantage that in a simple and inexpensive way, the conversion of electric energy can be performed at relatively low costs.

Preferably, the electrical energy converting devices comprise at least one power to hydrogen producing device and/or at least one power to ammonia producing device and/or at least one compressor and/or at least one pump and/or at least one water treatment device. The power to hydrogen producing device can be configured for performing an electrolysis to generate hydrogen from water. Thus, the electric energy can be transformed to chemical energy of hydrogen. The ammonia producing device can be configured for performing an electrolysis to generate hydrogen from water and to generate ammonia by combining the hydrogen with nitrogen, especially under the use of respective membranes. Thus, the electric energy can be transformed to chemical energy of ammonia. The at least one compressor is preferably configured to compress a gas inside a pressure chamber. Thus, the electric energy can be transformed to pressure energy of a gas. The at least one pump is preferably configured to pump a fluid, such as water or the like, to a higher potential level. Thus, the electric energy can be transformed into potential energy of water. The at least one water treatment device is preferably configured to filter pollution, such as particles, chemicals or the like, out of water. Thus, the electric energy can be used to provide cleaned water. This has the advantage that in a simple and inexpensive way, the electric energy can be converted to fulfill a demand at relatively low costs.

According to a second aspect of the invention, the object is achieved by a method for operating an energy conversion system according to the invention. The method comprises:
- operating the plurality of electric power producing devices to produce electric energy,
- coordinating the operation of the plurality of first network bridges and the plurality of second network bridges in a way that the pulse width modulations are performed with a relative time offset to reduce harmonics, and
- operating the plurality of electric energy converting devices to use the electrical energy for the production of a fuel.

The plurality of electric power producing devices is operated to produce electric energy. Preferably, a wind turbine is used to convert wind energy into electric energy. Alternatively, or additionally, a photovoltaic module is used to convert solar energy into electric energy.

The plurality of first network bridges is operated in a way that the pulse width modulations are performed with a relative time offset to reduce harmonics. This means that on the electric energy production side, harmonics are eliminated or at least dampened by a phase delay switching operation. The electric energy is provided to the micro grid of the energy conversion system.

The electric energy is transferred through the micro grid to the plurality of second network bridges. The plurality of second network bridges is operated in a way that the pulse width modulations are performed with a relative time offset to reduce harmonics. This means that on the electric energy consumption side, harmonics are eliminated or at least dampened by phase delay switching operation. Preferably, the phase delay is also coordinated between the first network bridges and the second network bridges in order to dampen the harmonics more efficiently.

With the electric energy, the plurality of electric energy converting devices is operated for the production of a fuel, such as hydrogen, ammonia or the like.

The method for operating an energy conversion system according to the invention has all the advantages that have already been described for an energy conversion system for producing and converting electric energy according to the first aspect of the invention. Accordingly, the method according to the invention has the advantage over conventional methods that in a simple and inexpensive way, a usually neglected source of unwanted harmonics, namely the operation of the second network bridges of the electric energy converting devices, is addressed and reduced significantly. Therefore, there is less demand for expensive additional harmonic filtering. By these means, the efficiency of the method for operating an energy conversion system according to the invention is increased compared to conventional methods.

Further advantages, features and details of the invention unfold from the following description, in which by reference to drawings, working examples of the present invention are described in detail. Thereby, the features from the claims as well as the features mentioned in the description can be essential for the invention as taken alone or in an arbitrary combination. In the drawings:
Figure 1 shows a schematic view of a preferred embodiment of an energy conversion system according to the invention,
Figure 2 shows a schematic diagram of the pulse width modulations of three second network bridges according to a preferred embodiment of the invention, and
Figure 3 shows a schematic process chart of a method according to a preferred embodiment of the invention.

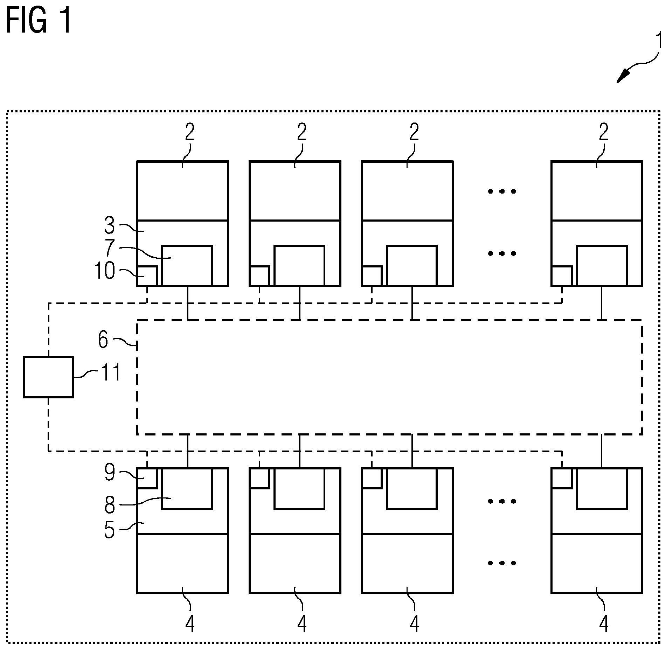

Elements with the same function and effectiveness are denoted each in figs. 1 - 3 with the same reference numbers.

In fig. 1, a preferred embodiment of an energy conversion system 1 according to a preferred embodiment of the invention is shown. The energy conversion system 1 comprises a plurality of electric power producing devices 2 with first power converting devices 3, a plurality of electric energy converting devices 4 with second power converting devices 5 and a micro grid 6 for transferring electric energy from the first power converting devices 3 to the second power converting devices 5. Each first power converting device 3 comprises a first network bridge 7 for pulse width modulation. Each second power converting device 5 comprises a second network bridge 8 for pulse width modulation.

For coordinating a predetermined relative time offset of the pulse width modulation of the first network bridges 7 and the second network bridges 8 to reduce harmonics, the first power converting devices 3 comprise a first data exchange port 10, and the second power converting devices 5 comprise a second data exchange port 9. The first data exchange ports 10 and the second data exchange ports 9 are linked to a switching coordination device 11 for coordination of the time offsets of pulse width modulation of the first network bridges 7 and the second network bridges 8.

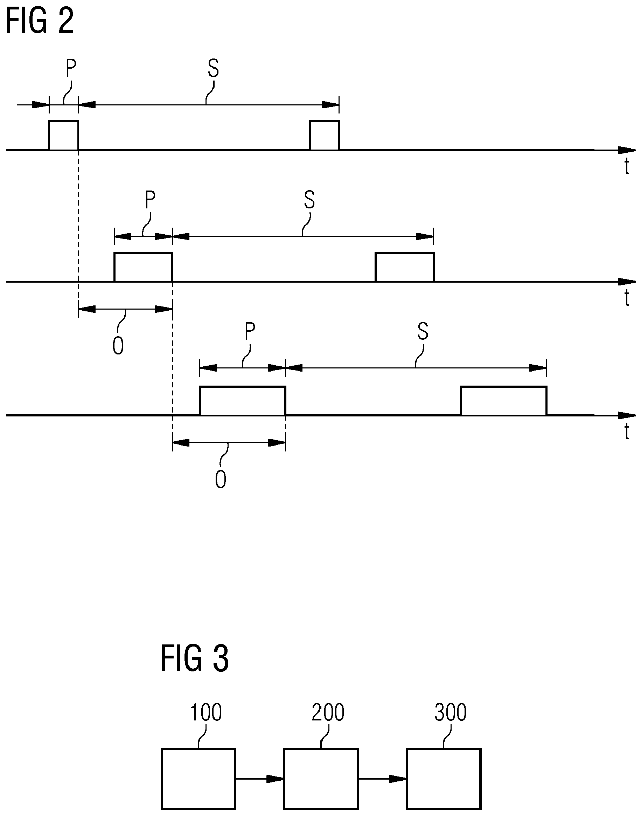

Fig. 2 shows a schematic diagram of the pulse width modulations of three second network bridges 8 according to a preferred embodiment of the invention. The second network bridges 8 are configured for performing a pulse width modulation with different pulse lengths P, the same switching period length S and a time offset O.

In fig. 3, a method according to a preferred embodiment of the invention is shown in a schematic process chart. In a first method action 100, the plurality of electric power producing devices 2 is operated to produce electric energy. In a second method action 200, the operation of the plurality of first network bridges 7 and the plurality of second network bridges 8 is coordinated by the switching coordination device 11 in a way that the pulse width modulations are performed by the first network bridges 7 and the second network bridges 8 with a relative time offset to reduce harmonics. In a third method action 300, the plurality of electric energy converting devices 5 is operated to use the electrical energy for the production of a fuel. For this purpose, other process components can be provided, such as air, pure oxygen, water or other chemical elements, molecules, compounds or the like.

## Claims

1. Energy conversion system (1) for producing and converting electric energy, comprising a plurality of electric power producing devices (2) with a plurality of first power converting devices (3), a plurality of electric energy converting devices (4) with a plurality of second power converting devices (5) and an electric power micro grid (6) for transporting electric energy from the first power converting devices (3) to the second power converting devices (5), wherein each first power converting device (3) comprises a first network bridge (7) for pulse width modulation and each second power converting device (5) comprises a second network bridge (8) for pulse width modulation,
**characterized in**
**that** the second network bridges (8) are configured for providing pulse width modulation with a predetermined relative time offset to reduce harmonics.

2. Energy conversion system (1) according to claim 1, **characterized in**
**that** the second network bridges (8) are configured for providing pulse width modulations with the same switching period length (S).

3. Energy conversion system (1) according to claim 1 or 2, **characterized in**
**that** the second power converting devices (5) comprise a second data exchange port (9) for communication to coordinate the time offset for the second network bridges (8).

4. Energy conversion system (1) according to any of the previous claims,
**characterized in**
**that** the first network bridges (7) are configured for providing pulse width modulation with a predetermined relative time offset to reduce harmonics.

5. Energy conversion system (1) according to any of the previous claims,
**characterized in**
**that** the first network bridges (7) are configured for providing pulse width modulations with the same switching period length.

6. Energy conversion system (1) according to claim 4 or 5, **characterized in**
**that** the first power converting devices (3) comprise a first data exchange port (10) for communication to coordinate the time offset for the first network bridges.

7. Energy conversion system (1) according to claim 3 and 6, **characterized in**
**that** the first data exchange ports (10) and the second data exchange ports (9) are configured for coordination of a time offset between the pulse width modulations of the first network bridges (7) and the pulse width modulations of the second network bridges (8).

8. Energy conversion system (1) according to any of the previous claims,
**characterized in**
**that** the electric power producing devices (2) comprise at least one wind turbine and/or at least one photovoltaic module.

9. Energy conversion system (1) according to any of the previous claims,
**characterized in**
**that** the electrical energy converting devices (4) comprise at least one power to hydrogen producing device and/or at least one power to ammonia producing device and/or at least one compressor and/or at least one pump and/or at least one water treatment device.

10. Method for operating an energy conversion system (1) according to any of the previous claims, comprising:
- operating the plurality of electric power producing devices (2) to produce electric energy,
- coordinating the operation of the plurality of first network bridges (7) and the plurality of second network bridges (8) in a way that the pulse width modulations are performed with a relative time offset to reduce harmonics, and
- operating the plurality of electric energy converting devices (5) to use the electrical energy for the production of a fuel.
